# EUROPEAN PATENT APPLICATION

(11) **EP 4 503 018 A1**
(43) Date of publication of application: **05.02.2025**
(21) Application number: 24190911.8
(22) Date of filing: 25.07.2024
(51) Int. Cl.: G10L 13/027, B60R 16/037, G06F 40/56, H04L 51/02, G10L 25/63

(54) **ARTIFICIALLY INTELLIGENT COMPANION FOR ENGAGING WITH A PERSON IN A MOTOR VEHICLE**

(30) Priority: 31.07.2023 US 202363529802 P
(71) Applicant: Cerence Operating Company, Burlington, MA 01803 (US)
(72) Inventor: KANE, Mark, Burlington, MA, 01803 (US)
(74) Representative: Taruttis, Tilman

(57) **Abstract**

An artificially intelligent companion that engages in a conversation with a person in a vehicle using a chatbot and a prompter that provides a prompt to the chatbot. A context source provides context to the chatbot.

## Description

### Background

The invention relates to automotive electronics and in particular to electronic devices for ameliorating the effects of driver loneliness.

Not long after the widespread adoption of automobiles, it became apparent that driving long distances could quickly become tedious and wearisome. To some extent, having a congenial passenger along for the ride could relieve the burden of long-distance driving. With a good conversationalist at one's side, the miles would seem to go swiftly by.

Unfortunately, it was not always possible to travel with a good conversationalist. Not surprisingly, among the first accessories that became widely available was a car radio. With the invention of portable audio storage media, these soon evolved into tape decks, CD players, and most recently, MP3 players. All of these have in common the ability to provide audio entertainment to relieve the tedium of long-distance travel.

Although these devices do provide effective audio entertainment, they are inherently passive. Other than perhaps singing along with the radio, one does not truly interact with such devices. As a result, these devices are no substitute for a passenger who is steeped in the art of conversation.

### Summary

In one aspect, the invention features an artificially intelligent companion that is configured for engaging in a conversation with a person. Among the embodiments are those in which the artificially intelligent companion comprising a chatbot and a prompter that provides a prompt to the chatbot. The prompt is derived based at least in part on an audio microphone signal that is provided by a microphone that receives, from the person, a first round of the conversation. The chatbot generates a second round of the conversation for delivery to the person via a loudspeaker. In some of these embodiments, a context source that provides context to the chatbot. In such embodiments, the chatbot uses the context to generate a second round of the conversation for delivery to the person via a loudspeaker.

In some embodiments, the chatbot is one that implements a generative model. In other embodiments, the chatbot implements a large language model.

Other embodiments include those in which the context used by the chatbot to generate the second round includes personal information about said person and those in which the context used by the chatbot generates a second round that advances the conversation by inviting another person round from the person.

Still other embodiments include those in which the chatbot is further configured to generate the second round based on context obtained from either the first round or from a round that preceded the first round.

In some embodiments, the person is an occupant of a vehicle. Among these are embodiments in which the person is the vehicle's driver and those in which the person is a passenger. In some embodiments, the chatbot has been trained to entertain toddlers, in which case the person is a needy toddler in the vehicle's back seat who is badly in need of attention, in which case the artificially intelligent companion plays the role of an artificially intelligent pacifier.

In other embodiments, the person is on foot, for example after having left the vehicle, and the artificially intelligent companion is implemented on a portable device carried by that person. This permits the artificially intelligent companion to be used while at home, out for a walk, out shopping, for example for clothes, and after having left the vehicle. In the latter case, embodiments include those in which the artificially intelligent companion is implemented in the vehicle but then smoothly transitions into being implemented on the person's portable device as it becomes apparent, to the artificially intelligent companion, that the person is leaving the vehicle.

In some embodiments, the first round is also the first round of the conversation, as a whole. However, in other embodiments, a zeroth round, which has been provided by the artificially intelligent companion, precedes the first round. Accordingly, in operation, there exist conversations that are initiated by the person and conversations that are initiated by the artificially intelligent companion.

Embodiments include those in which context comprises information concerning the vehicle's kinematic state, those in which the context comprises a future location of the vehicle, those in which the context comprises information concerning the person, those in which the context comprises readings from sensors in the vehicle, those in which the context comprises biometric information concerning the person, those in which the context concerns an emotional state of the person, and those in which the context comprises prosodic information concerning the person's speech. In each of the foregoing cases, the context is relied upon at least in part to generate the second round of the conversation.

Still other embodiments include those in which the context comprises any one or more of information concerning one or more of information concerning current affairs, information concerning the vehicle's environment, information concerning the person, local news, information concerning new movies, information concerning books, and information concerning weather.

Further embodiments include those in which the chatbot is configured to adjust a cognitive load of the conversation in response to the context, those in which the chatbot has been trained to engage in a non-judgmental conversation, those in which the chatbot has been trained to engage in debate with the person, and those in which the chatbot chooses a topic of the conversation based on the context. Among these are embodiments in which the extent to which the conversation is non-judgmental is adjustable and those in which the relentlessness of the artificially intelligent companion in debate is likewise adjustable.

Also among the embodiments are those in which the artificially intelligent companion is configured to sense a lack of attention in the person and to initiate the conversation in response to having sensed the lack of attention.

Still other embodiments include those in which the artificially intelligent companion further comprises a classifier that receives information concerning the person. Such information comes from one or more of the audio microphone signal, a camera signal from a camera that points to that person, a haptic sensor that senses force resulting from activity by that person, and a sensor that measures a physiological signal from that person. Examples of cameras include those sensitive to visible radiation and those sensitive to radiation outside the visible range, such as infrared radiation, ultraviolet radiation, and ionizing radiation, such as X-rays.

The classifier classifies that person as belonging to one or more classes and provides that information either to the context source, for use as additional context, or to the prompter, for use in generating the prompt, or to both for both of the foregoing purposes. The claims attached herewith, and the accompanying description refer to a "first" round as being provided by the person and the "second" round as being provided by the artificially intelligent companion. However, this is not intended to imply that the conversation must be initiated by the person. It is quite possible for a "zeroth round" to have been delivered by the artificially intelligent companion and for the "first round" to simply be a response to this "zeroth round."

As used herein, the "second round" excludes a mere perfunctory answer to a question posed in a "first round." Thus, the "second round" is one that is configured to use context information to advance the conversation.

In another aspect, the invention features a method that includes collecting context information for use in carrying out a conversation with a person in vehicle, determining that a person in a vehicle is displaying signs of inattention, and causing an artificially intelligent companion to engage in conversation with that person. In such practices, causing the artificially intelligent companion to engage in the conversation comprises: receiving an audio signal from a microphone, the audio signal comprising a first round of the conversation, using the first round to provide a prompt to a chatbot, providing the context to the chatbot, causing the chatbot to generate a second round of the conversation based on the prompt and on the context, and causing the second round to be output to the person via a loudspeaker.

Among the practices of the method are those in which the chatbot implements a large-language model and those in which it implements a generative model.

Practices of the method include those in which the first round is preceded by a zeroth round of conversation that was generated by the chatbot, those in which the first round initiates the conversation, and those in which a zeroth round that precedes the first round initiates the conversation, the zeroth round having been generated by the chatbot.

Among the practices in which a zeroth round initiates the conversation are those in which the chatbot proactively starts a conversation when context indicates occurrence of a condition. Among these are practices in which the context indicates that the driver is about to embark on a long journey, for example, as a result of a destination that has been set or by recognizing that the vehicle is following a route that has historically led to a long journey. By proactively initiating a conversation, the chatbot immediately begins to engage the driver and thus delays the onset of driver fatigue.

These and other features of the invention will be apparent from the following detailed description and the accompanying figures, in which:

### Description of Drawings

FIG. 1 shows a vehicle having an artificially intelligent companion that engages a person in conversation.
FIG. 2 shows an alternative embodiment of the artificially intelligent companion shown in FIG. 1.

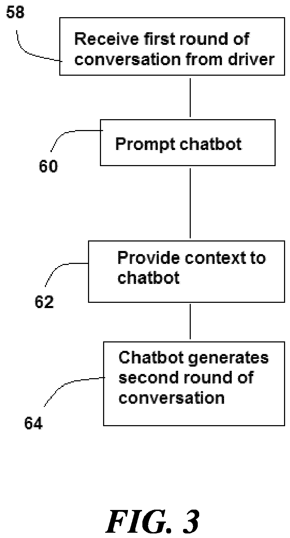

FIG. 3 shows a method carried out by the artificially intelligent companion of FIGS. 1 and 2.

### Detailed Description

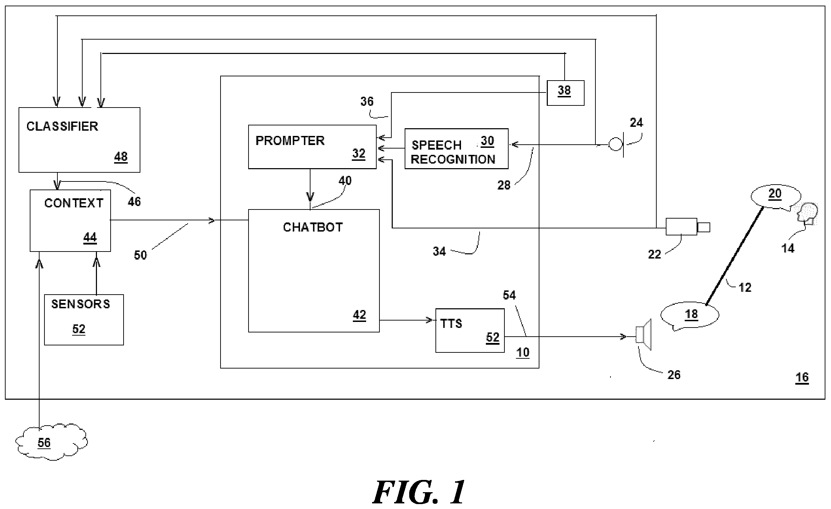

FIG. 1 shows an AI-implemented artificially intelligent companion 10 that engages in conversation 12 with a person 14 in a vehicle 16. In such a conversation 12, the artificially intelligent companion 10 delivers a companion round 18 and the person delivers a person round 20. Person rounds 20 and companion rounds 18 alternate with each other to form the conversation 12. To the extent that the companion round 18 and the person round 20 build on common semantic content, the conversation 12 develops the desirable property of entertaining the person 14. In contrast to the passive entertainment provided by listening to music or to an audio book, the conversation 12 provides interactive entertainment.

To enable the artificially intelligent companion 10 to participate meaningfully in conversation 12, it is useful to provide it with eyes and ears in the form of a camera 22 and a microphone 24, respectively. These also provide the artificially intelligent companion 10 with a basis for evaluating a person round 20. In addition, it is also useful to provide the artificially intelligent companion 10 with a loudspeaker 26 to permit the companion 10 to communicate a companion round 18 to the person 14.

The microphone 24 provides an audio microphone signal 28 to a speech recognition unit 30. The output of the speech recognition unit 30 is provided to a prompter 32, along with a video signal 34 from the camera 22 and a cabin sensor signal 36 from a cabin sensor 38. These three signals cooperate to provide the prompter 32 with a basis for evaluating the state of the person 14 and thus providing a suitable prompt 40 to an AI chatbot 42.

The chatbot's role is that of formulating a companion round 18 to deliver to the person 14 in an effort to maintain the conversation 12 at a suitable level of cognitive load. To carry this out, it is useful for the chatbot 42 to have something to talk about. As a result, it is useful to place the chatbot 42 in communication with a context source 44.

To promote a more realistic conversation 12 and to dispel the illusion that the chatbot 42 is a stranger who is unfamiliar with the person 14, it is useful for the chatbot to have some personal information 46 concerning the person 14. Such personal information 46 is acquired by providing a classifier 48 that receives signals from the microphone 24, from the camera 22, and from the cabin sensor 38.

The classifier 48 extracts, from the aforementioned signals, information indicative of the person's age, emotional state, socio-economic cues inferred from speech, such as from the person's accent, and any other biometric information provided by those signals. Such personal information is useful for providing the chatbot 42 with information on how to manage the conversation 12 with the particular person 14.

In the embodiment shown in FIG. 1, the classifier 48 provides the background information 46 to the context source 42, which aggregates it with other information and provides the resulting context 50 to the chatbot 42. Based on context 50 provided by the context source 44, the video signal 34 provided by the camera 22, and the prompt 40 provided by the prompter 26, the chatbot 42 provides a companion round 18 to a text-to-speech converter 52, which then outputs a corresponding audio loudspeaker signal 54 to the loudspeaker 26.

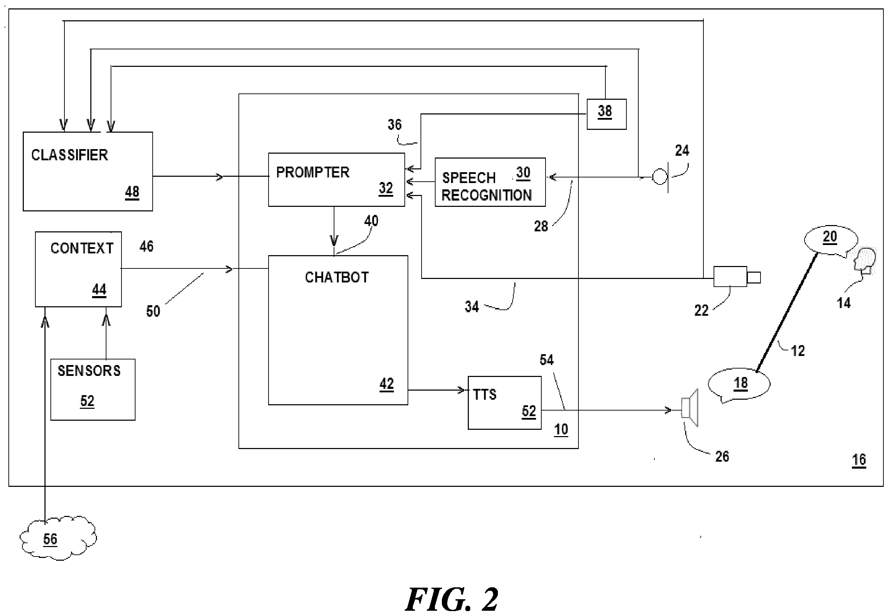

In an alternative embodiment, shown in FIG. 2, the classifier 48 provides the background information to the prompter 32, which then uses it as a basis for generating a prompt 40 for the chatbot 42. Other than that, the operation of the embodiment shown in FIG. 2 is as described in connection with FIG. 1.

To promote favorable engagement with the person 14, it is best for the artificially intelligent companion 10 to converse in a relatively predictable way. Thus, when it comes time for the artificially intelligent companion 10 to advance the conversation 12 with a companion round 18 in response to a person round 20, it is preferable for that companion round 18 to be one that is likely to occur given one or more preceding person rounds 20 and/or companion rounds 18. As a result, it is useful to implement the chatbot 42 as generative language model that has been trained to converse about various topics and to do so in a non-judgmental manner.

In addition, the chatbot 42 has been trained to converse in a manner that avoids excessive cognitive load. In particular, the chatbot 42 has been trained to maintain a sufficient cognitive load to stimulate the person 14 but not so much as to tend to monopolize the person's capacity for attention. An example of the former is a conversation 12 about sports or current affairs. An example of the latter is a conversation 12 about the foundations of quantum mechanics.

Of course, the optimal cognitive load and the subject matter of conversation 12 are both inherently person dependent. Accordingly, it is useful for the context source 44 to provide the chatbot 42 with intelligence concerning the person 14. For example, if, based on context information, the person 14 is known to have an interest in a particular field, (e.g., the person is an opera buff), then the chatbot 42 tunes the conversation 12 accordingly (e.g., by discussing plots of selected operas).

In addition, the chatbot 42 has also been trained as an active listener that prompts the person 14 to vent about the day's events or various difficulties that the person 14 may be facing.

In some embodiments, the chatbot 42 is also configured to mimic a particular individual. For example, it would be possible to train the chatbot using text from a compilation of Jane Austen books, thereby enabling the chatbot 42 to converse in a manner that would mimic Jane Auster's speech patterns, complete with an English accent from the regency era.

The context source 44 comprises different types of context 50. This context 50 provides the chatbot 42 with fodder for conversation 12.

In some cases, context 50 is provided by the camera 22. For example, if the video signal 34 reveals that the person 14 is wearing a golfing outfit, then the chatbot 42 recognizes that a conversation 12 centered around golf may be one that the person 14 would find stimulating. Similarly, the cabin sensor 38 provides information available from within the vehicle's cabin that is pertinent to determining a person's state and that is otherwise not available through the camera 22 or the microphone 24.

In some embodiments, the cabin sensor 38 is a haptic sensor. Examples include a haptic sensor coupled to the vehicle's seat, in which case a person's frequent movement on the seat may indicate restlessness. Other examples include a haptic sensor coupled to the vehicle's steering wheel, which measures a person's grip and thus provides an indicator of stress.

In some cases, a cabin sensor 38 measures physiological signals from which a person's state can be inferred. Examples include sensors that measure electrical properties of the skin, such as the skin's conductance and/or capacitance. Examples of such sensors include electrodermal-activity sensors, galvanic skin response sensors, and sweat sensors. Such sensors provide information from which it is possible to infer a person's emotional state, arousal level, or stress response. A sweat sensor, when placed on the steering wheel or on an armrest, analyzes the composition of a person's perspiration and those provides information on hydration level and electrolyte balance.

Other examples of a cabin sensor 38 that measures physiological signals includes a cabin sensor 38 that measures electrical activity of the person's brain. Such a cabin sensor 38 is useful for identifying drowsiness as well as providing a signal to be used by a brain-vehicle interface. Examples of such a cabin sensor 38 include an electroencephalogram. An electroencephalogram built into the vehicle's seat provides a particularly suitable location for such a measurement.

Still other examples of a cabin sensor 38 are those that measure and record electrical activity of a person's heart. Examples of such a cabin sensor 38 include an electrocardiogram for diagnosing and monitoring heart condition. An artificially intelligent companion 10 that detects an irregularity would advise the person 14 concerning the availability of medical assistance or offer to call an ambulance.

The cabin sensors 38 thus far have had in common the use of an electrical signal as a basis for collecting information. However, there also exist cabin sensors that rely on an optical signal. An example of such a cabin sensor is a pulse oximeter for use in monitoring blood oxygen level and hear rate. Such sensors rely on modulation of electromagnetic radiation in the visible range and/or in the infrared range.

Still other forms of context 50 available to the context source 44 include readings from various sensors 52 in the vehicle 16, such as weight sensors on seats, cabin air temperature, and various in-car settings.

In some embodiments, the chatbot 42 changes the subject matter of conversation 12 in response to rounds received from the person 14. Thus, a conversation 12 that starts off about the weather may eventually veer off into a discussion of the Earth's system of convective cells and their effect on the weather.

One useful source of context 50 arises from the vehicle's kinematic history. For example, variations in the vehicle's velocity vector, such as swerving or speed variations, would suggest that the person 14 is not paying close attention to the road.

The vehicle's kinematic history also includes its current location and past locations, all of which are available from a GPS unit. For those cases in which the GPS has been programmed to reach a destination, future locations also form part of the vehicle's kinematic history. In such cases, the artificially intelligent companion 10 is able to use location information combined with knowledge concerning the environment to comment on the availability of nearby services, such as a nearby restaurant or gas station.

Yet another source of information comprises information concerning the person's physical and mental state, including biometric information. Such information is available from the video signal 34, which can be used to see if the person is perhaps slouching excessively, thus indicating fatigue. Additional information is available from the audio microphone signal 28, which can reveal prosodic aspects of the person's speech that may indicate fatigue, such as slurring or incoherence. Still more information is available from the haptic signal 36, which may indicate, for example, that the person 14 is gripping the steering wheel with unusual force.

In some embodiments, the biometric information provides a basis for recognizing the person, which in turn provides the artificially intelligent companion 10 with an opportunity to personally greet the person as the person enters the car, thus establishing rapport. In some cases, the artificially intelligent companion 10 also recognizes that the person is not sitting in the usual location within the vehicle and that someone unrecognized is driving. In such a case, the artificially intelligent companion 10 has an opportunity to inquire about the new driver and perhaps seek an introduction.

Further examples of context 50 include information concerning current affairs, information concerning the vehicle's environment, information concerning the person, local news, new movies or books, and the weather. Such information is often available from a cloud-based server 56.

The combination of biometric information and the vehicle's kinematic history is useful for evaluating the person's state so as to recognize when intervention through conversational engagement would be required to stimulate the person's level of alertness. Accordingly, in some embodiments, the artificially intelligent companion 10 constantly monitors such information in an effort to determine whether it should proactively open a conversation with the person 14.

In some embodiments, certain components of the companion 10 or portions thereof are located remote from the vehicle, for example on the cloud-based server 54. These components include the chatbot 42, the speech recognition unit 30, and the prompter 32.

Referring now to FIG. 2, a method for entertaining the person 14 with conversation 12 using the artificially intelligent companion 10 includes receiving a person round 20 from the person (step 58) and generating a prompt 40 that is then provided to the chatbot 42 (step 60). Meanwhile, the chatbot 42 also receives context 50 (step 62). Based on the context 50 and on the prompt 40, the chatbot 42 generates a companion round 18 of the conversation 12 (step 64).

Having described the invention and a preferred embodiment thereof, what is claimed as new and secured by letters patent is:

## Claims

1. An apparatus comprising an artificially intelligent companion that is configured for engaging in a conversation with a person of a vehicle, said artificially intelligent companion comprising
a chatbot ,
a prompter that provides a prompt to said chatbot, said prompt being derived from an audio microphone signal that is provided by a microphone that receives, from said person, a first round of said conversation, and
a context source that provides context to said chatbot,
wherein said chatbot uses said context to generate a second round of said conversation for delivery to said person via a loudspeaker.

2. The apparatus of claim 1, wherein said chatbot implements a large-language model.

3. The apparatus of claim 1, wherein said context used by said chatbot to generate said second round includes personal information about said person.

4. The apparatus of claim 1, wherein said chatbot is further configured to generate said second round based on context obtained from at least one of said first round and a preceding round that occurred prior to said first round.

5. The apparatus of claim 1, wherein said context comprises information concerning said vehicle's kinematic state.

6. The apparatus of claim 1, wherein said context comprises a future location of said vehicle.

7. The apparatus of claim 1, wherein said context comprises information concerning said person and wherein said chatbot uses said information concerning said person to generate said second round of said conversation.

8. The apparatus of claim 1, wherein said context comprises readings from sensors in said vehicle and wherein said chatbot uses said readings from said sensors when generating said second round of said conversation.

9. The apparatus of claim 1, wherein said context comprises biometric information concerning said person and wherein said chatbot uses said biometric information concerning said person in the course of generating said second round of said conversation.

10. The apparatus of claim 1, wherein said context comprises prosodic information concerning said person's speech and wherein said chatbot bases said second round of said conversation at least in part on said prosodic information.

11. The apparatus of claim 1, wherein said context comprises information concerning an emotional state of said person and wherein said chatbot uses said information concerning said emotional state to generate said second round of said conversation.

12. The apparatus of claim 1, wherein said context comprises information concerning one or more of information concerning current affairs, information concerning the vehicle's environment, information concerning said person, local news, information concerning new movies, information concerning books, and information concerning weather.

13. The apparatus of claim 1, wherein said chatbot is configured to adjust a cognitive load of said conversation in response to said context.

14. The apparatus of claim 1, wherein said chatbot has been trained to engage in a non-judgmental conversation.

15. The apparatus of claim 1, wherein said chatbot has been trained to engage in a debate with said person.

16. The apparatus of claim 1, wherein said chatbot chooses a topic of said conversation based on said context.

17. The apparatus of claim 1, wherein said artificially intelligent companion is configured to sense a lack of attention in said person and to initiate said conversation in response to having sensed said lack of attention.

18. The apparatus of claim 1, wherein said artificially intelligent companion further comprises a classifier that receives information concerning said person and uses said information to provide context to said context source, wherein said information is obtained from said audio microphone signal.

19. The apparatus of claim 1, wherein said artificially intelligent companion further comprises a classifier that receives information concerning said person and uses said information to provide context to said prompter for use in generating said prompt, wherein said information is obtained from a camera signal from a camera that points at said person.

20. The apparatus of claim 1, wherein said artificially intelligent companion further comprises a classifier that receives information concerning said person and uses said information to provide context to said prompter for use in generating said prompt, wherein said information is obtained from a haptic sensor that is in mechanical communication with said person.

21. The apparatus of claim 1, wherein said artificially intelligent companion further comprises a classifier that receives information concerning said person and uses said information to provide context to said prompter for use in generating said prompt, wherein said information is obtained from a sensor that obtains a physiological signal from said person.

22. A method comprising causing an artificially intelligent companion to engage in conversation with person in a vehicle, wherein causing said artificially intelligent companion to engage in said conversation comprises
receiving, via a microphone, a first round of said conversation,
providing a prompt to a chatbot, said prompt having been derived at least in part from said first round,
providing context to said chatbot,
based on said prompt and on said context, generating a second round of said conversation.

23. The method of claim 22, further comprising determining that said person in said vehicle is displaying signs of inattention and causing said artificially intelligent companion to initiate said conversation with said person.

24. The method of claim 22, wherein said first round is preceded by a zeroth round of conversation that was generated by said chatbot.

25. The method of claim 22, wherein said first round initiates said conversation.

26. The method of claim 22, wherein a zeroth round that precedes said first round initiates said conversation, said zeroth round having been generated by said chatbot.

27. The method of claim 22, wherein said chatbot implements a generative model.

28. The method of claim 22, wherein a zeroth round that precedes said first round initiates said conversation, said zeroth round having been proactively generated by said chatbot upon occurrence of a condition.

29. The method of claim 22, wherein a zeroth round that precedes said first round initiates said conversation, said zeroth round having been proactively generated by said chatbot based upon an expected length of a journey to be undertaken by said person.
